# FASCICULE DE BREVET EUROPEEN

(11) **EP 2 779 827 B1**
(45) Date de publication et mention de la délivrance du brevet: **08.01.2020**
(21) Numéro de dépôt: 12795570.6
(22) Date de dépôt: 16.11.2012
(51) Int. Cl.: A01M 29/06

(54) **PROCÉDÉ ET DISPOSITIF D'EFFAROUCHEMENT VISUEL D'ESPÈCES AVIAIRES**
VERFAHREN UND VORRICHTUNG ZUR VISUELLEN ABSCHRECKUNG VON VOGELARTEN
METHOD AND DEVICE FOR VISUALLY SCARING BIRD SPECIES

(30) Priorité: 18.11.2011 FR 1160545
(43) Date de publication de la demande: 24.09.2014
(73) Titulaire: Airbus Operations (S.A.S.), 31060 Toulouse (FR); Université de Rennes 1, 35065 Rennes Cedex (FR); Centre National de la Recherche Scientifique, 75794 Paris Cedex 16 (FR)
(72) Inventeur: PAPIN, Nathalie, F-31500 Toulouse (FR); HAUSBERGER, Martine, F-35380 Paimpont (FR); HENRY, Laurence, F-35235 Thorigne-Fouillard (FR); RICHARD, Jean-Pierre, F-35520 La Chapelle des Fougeretz (FR); DE MARGERIE, Emmanuel, F-35200 Rennes (FR)
(74) Mandataire: Gevers & Orès
(86) Numéro de dépôt international: PCT/FR2012/052654
(87) Numéro de publication internationale: WO 2013/072642

(56) Documents cités:
- JP-A- 2009 089 645
- JP-A- 2010 017 159
- JP-A- 2010 081 928
- JP-A- 2011 155 856
- US-A- 5 774 088
- US-A1- 2005 028 720
- US-A1- 2010 230 531
- US-A1- 2011 054 691

## Description

La présente invention concerne un procédé et un dispositif d'effarouchement visuel d'espèces aviaires.

Un tel dispositif a pour objet d'éloigner, par la génération de signaux visuels, des espèces aviaires de zones sensibles d'activité humaine.

La présente invention peut notamment s'appliquer au domaine agricole, au domaine éolien et au domaine de l'architecture (bâtiments).

La présente invention peut également s'appliquer à l'effarouchement visuel d'espèces aviaires sur un aéroport, notamment pour limiter les collisions aviaires avec les aéronefs.

Les moyens usuels d'effarouchement visuel au sol impliquent des épouvantails, des leurres, des ballons, des miroirs, des faucons vivants et des systèmes lumineux comme des flashs ou des lasers. L'efficacité de ces moyens usuels est variable, et dans la plupart des cas, les oiseaux montrent une habituation relativement rapide à ces derniers. La plupart de ces moyens privilégient des dispositifs d'effarouchement « bio-visuels », censés reproduire des indices biologiques.

L'utilisation de stimuli lumineux inhabituels pour les oiseaux, et plus particulièrement de lasers, a donné des résultats variables selon le contexte et l'espèce considérée, mais peut se révéler utile en complément d'autres techniques (pyrotechnie,...). L'efficacité des signaux lumineux est restreinte de jour et particulièrement par beau temps, sans compter les aspects sécuritaires qui encadrent leur utilisation (effets des lasers sur la rétine par exemple).

Outre les problèmes généraux d'habituation, l'ensemble de ces dispositifs usuels présentent également l'inconvénient de fonctionner uniquement au sol, alors que, sur un aéroport, plus de la moitié des collisions a lieu en vol, principalement en phases d'approche et de montée.

Il existe différents dispositifs usuels à base de signaux lumineux artificiels. Toutefois, aucun de ces dispositifs n'a prouvé son efficacité.

Par conséquent, les principaux problèmes des dispositifs d'effarouchement visuel usuels, outre leur capacité toute relative à effaroucher les espèces aviaires, sont les phénomènes d'habituation des oiseaux et la limitation d'une utilisation efficace de ces dispositifs au sol et en conditions de faible luminosité.

De plus, les moyens de lutte aviaire mis en place sur les sites aéroportuaires sont très hétérogènes d'une zone géographique à une autre et d'un aéroport à un autre, et sont dépendants des réglementations aéronautiques locales en vigueur, ainsi que de la volonté des pouvoirs locaux. Il n'existe pas de technique d'effarouchement totalement satisfaisante au sol, et même les aéroports les mieux équipés sont demandeurs de solutions plus performantes.

Enfin, il apparaît qu'un nombre significatif de collisions a lieu en vol, parfois hors de la zone aéroportuaire. Peu de systèmes embarqués existent et ils n'ont aucunement fait la preuve de leur efficacité tant dans l'effarouchement des oiseaux que dans leur capacité à prévenir l'habituation. Par conséquent, il n'existe aucune solution de dispositif embarqué réellement efficace à ce jour, ni de technique d'effarouchement aviaire au sol considérée comme entièrement satisfaisante.

Par ailleurs, on connaît, par le document US 2010/0230531, un système et un procédé pour dissuader les oiseaux de voler à proximité de pistes d'atterrissage. Ce système comprend au moins un mortier pour tirer un dispositif pyrotechnique qui produit des signaux lumineux et sonores afin de perturber et d'effrayer les oiseaux.

En outre, on connaît, par le document US 2011/0054691, un procédé et un dispositif de contrôle d'oiseaux comprenant notamment un robot mobile pourvu de moyens de réception d'informations visuelles, sonores et sur l'environnement proche, d'une unité de contrôle qui transmet ces informations à une unité de commande qui détecte les oiseaux présents dans l'environnement proche, et des moyens d'émission de signaux de contrôle d'oiseaux selon un ordre de commande transmis par l'unité de commande.

La présente invention a pour objet de remédier aux inconvénients précités. Elle concerne un procédé d'effarouchement visuel d'espèces aviaires, suivant la revendication 1, qui est notamment particulièrement efficace.

A cet effet, ledit procédé est remarquable, selon l'invention, en ce que l'on génère au moins un signal visuel comprenant au moins une image, de taille variable au cours du temps, qui simule une approche par une augmentation de la taille de l'image.

De préférence :
- pour un même signal visuel, on réalise une suite d'augmentations de la taille de l'image correspondante, à chaque fois d'une taille minimale (qui peut être nulle) à une taille maximale ; et/ou
- on génère successivement plusieurs signaux visuels différents ; et/ou
- chaque signal visuel comprend l'une des images suivantes :
   - des yeux, qui sont particulièrement efficaces contre les rapaces ;
   - un disque par exemple noir, qui est efficace contre les passereaux (et la plupart des autres espèces aviaires) ; et
   - une spirale, qui présente une efficacité contre les galliformes.

Ainsi, la présente invention prévoit de générer un ou plusieurs signaux visuels, de type « looming », qui simulent une approche par une augmentation de la taille de l'image, dans le but d'effaroucher des espèces aviaires.

Le procédé conforme à la présente invention prévoit, de préférence, une série de signaux différents, qui est efficace sur un grand nombre d'oiseaux. Ce procédé peut notamment être mis en œuvre pour faire fuir les oiseaux de zones où leur présence se révèle nuisible ou dangereuse vis-à-vis des activités humaines, et notamment sur des domaines aéroportuaires.

Dans le cas d'une application sur un aéroport, le procédé d'effarouchement visuel conforme à la présente invention est utilisé pour détourner les oiseaux des trajectoires des avions qu'ils soient en vol ou au sol, dont le but est de réduire de façon importante les collisions aviaires dans les phases d'approche, de montée et de roulage au sol. En fonction de la nature des stimuli (ou signaux) visuels utilisés et de leur combinaison, on obtient une efficacité pour une diversité importante d'oiseaux.

Le procédé conforme à l'invention consiste donc à diffuser un ou plusieurs types de signaux (trois signaux en particulier), ayant prouvé leur efficacité sur différents groupes d'oiseaux (rapaces, passereaux, gallinacés) lors d'expérimentations, au cours desquelles ils ont induit, contrairement à d'autres stimuli (usuels), des réactions de peur et d'évitement majeures. L'utilisation conjointe des trois signaux préférés précités (yeux, disque noir, spirale) permet de balayer un large spectre et de limiter l'habituation, dont on a pu montrer qu'elle est quasi inexistante pour ces stimuli.

Ce choix préféré de signaux combinés permet ainsi d'effaroucher un maximum d'espèces différentes du monde entier, et ceci sans identification préalable.

De façon avantageuse, on génère la succession desdits signaux visuels différents, de manière aléatoire et à des intervalles irréguliers.

En outre, avantageusement :
- chaque signal visuel est généré pendant une même durée, par exemple dix secondes ; et/ou
- on augmente, de façon progressive, la taille de l'image. Il est également possible de réaliser une augmentation non progressive, par exemple qui est accélérée ou décélérée au début et/ou à la fin de la modification de taille ou qui présente une variation aléatoire.

Dans un mode de réalisation préféré, on engendre ledit au moins un signal visuel au niveau d'un engin mobile (roulant et/ou volant), de préférence au niveau d'un aéronef et en particulier d'un avion de transport.

La présente invention concerne également un dispositif d'effarouchement visuel d'espèces aviaires, suivant la revendication 10.

Selon l'invention, ledit dispositif est remarquable en ce qu'il comporte des moyens pour générer au moins un signal visuel comprenant au moins une image, de taille variable au cours du temps, qui simule une approche par une augmentation de la taille de l'image.

En outre, avantageusement, ledit dispositif comporte, de plus, des moyens de déclenchement desdits moyens de génération de signal visuel.

Ledit dispositif utilise, de préférence, une série de signaux visuels appropriés, telle que précitée, permettant d'éloigner le maximum d'espèces d'oiseaux sans nécessairement avoir à les identifier au préalable.

Le dispositif conforme à l'invention peut être un dispositif prévu au sol ou un dispositif embarqué sur un aéronef, dans le but notamment de réduire les collisions aviaires avec les aéronefs.

Dans cette dernière application, le dispositif d'effarouchement est indépendant des installations aéroportuaires locales, et peut donc être utilisé sur des aéroports dépourvus d'équipements d'effarouchement et de lutte aviaire.

L'utilisation d'un tel dispositif embarqué permet de réduire le risque de collision aviaire en vol dans les phases de vol les plus à risque, ainsi qu'à proximité et au niveau des sites aéroportuaires.

La présente invention concerne, en outre, un engin mobile, notamment un aéronef et en particulier un avion de transport, qui conformément à la revendication 12 comporte un dispositif tel que celui précité.

Dans ce dernier cas, dans un mode de réalisation préféré, lesdits moyens de génération du dispositif d'effarouchement sont agencés de manière à générer au moins un signal visuel :
- au niveau des ailes dudit aéronef ; et/ou
- au niveau de moteurs dudit aéronef.

Les figures du dessin annexé feront bien comprendre comment l'invention peut être réalisée. Sur ces figures, des références identiques désignent des éléments semblables.
La figure 1 est le schéma synoptique d'un dispositif d'effarouchement conforme à l'invention.
Les figures 2A, 2B, 2C et 2D montrent schématiquement des tailles successives croissantes d'un signal visuel particulier, généré par un dispositif conforme à l'invention.
La figure 3 est une représentation graphique montrant une variation préférée de la taille d'une image en fonction du temps.
Les figures 4 et 5 montrent respectivement des signaux visuels particuliers, susceptibles d'être générés par un dispositif conforme à l'invention.
Les figures 6A, 6B, 6C et 6D montrent schématiquement des tailles successives croissantes d'un signal visuel particulier, correspondant à celui de la figure 4, qui est généré sur un avion.

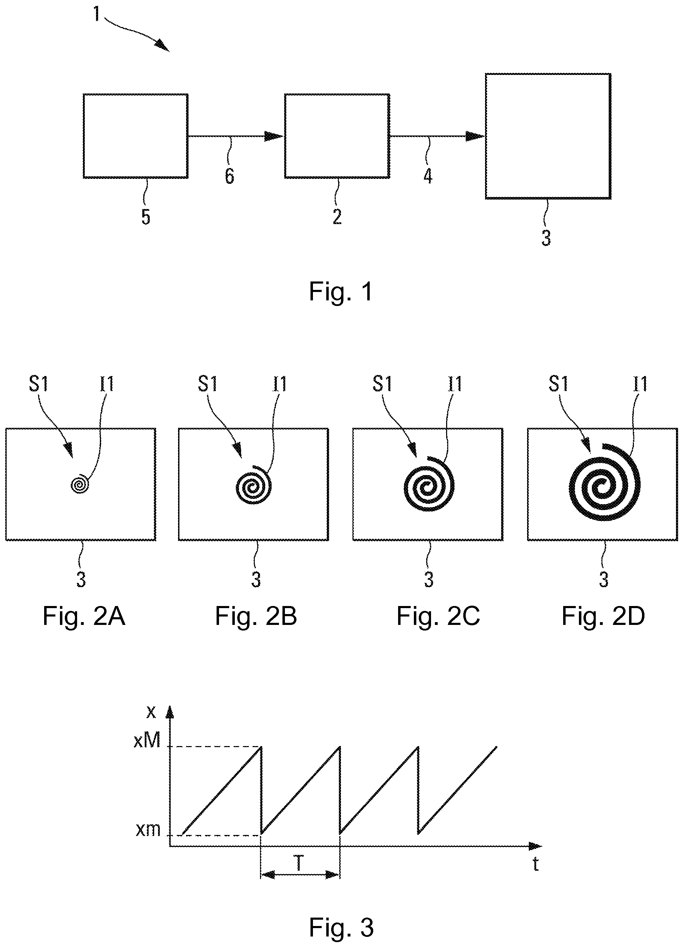

Le dispositif 1 conforme à l'invention et représenté schématiquement sur la figure 1 est un dispositif d'effarouchement visuel d'espèces aviaires. Ce dispositif 1 a pour objet d'éloigner par la génération de signaux visuels des espèces aviaires de zones sensibles d'activité humaine.

Selon l'invention, ledit dispositif 1 comprend :
- des moyens 2 de gestion d'au moins un signal visuel S1, S2, S3 conforme à l'invention et précisé ci-dessous ;
- des moyens 3 précisés ci-après, qui sont reliés par l'intermédiaire d'une liaison (de préférence électrique) 4 auxdits moyens 2 et qui sont formés de manière à émettre au moins un signal visuel S1, S2, S3 ; et
- des moyens 5 de déclenchement d'une telle émission, qui sont reliés par l'intermédiaire d'une liaison (de préférence électrique) 6 auxdits moyens 2 et qui permettent à un opérateur, par exemple le pilote d'un aéronef AC, d'activer le dispositif 1.

Selon l'invention, lesdits moyens 3 génèrent au moins un signal visuel S1, S2, S3 comprenant au moins une image, de taille variable au cours du temps, et ce signal visuel S1, S2, S3 simule une approche par une augmentation de la taille de l'image correspondante, comme représenté à titre d'illustration sur les figures 2A, 2B, 2C et 2D. Ces figures 2A à 2D montrent respectivement quatre tailles successives d'une même image I1, en l'occurrence une spirale, correspondant au signal S1.

De plus, de préférence, lesdits moyens 3 génèrent pour un même signal visuel (par exemple S1), une suite d'augmentations de la taille de l'image correspondante (par exemple I1), à chaque fois d'une taille minimale xm (qui peut être nulle) à une taille maximale xM, comme représenté sur la figure 3. Cette figure 3 montre l'évolution de la taille x, par exemple le diamètre de la spirale des figures 2A à 2D, en fonction du temps t. Sur la figure 3, chaque augmentation de taille présente une même durée T, par exemple deux secondes.

Dans un mode de réalisation préféré, précisé ci-dessous, lesdits moyens 3 génèrent successivement plusieurs signaux visuels différents S1, S2 et S3, dont chacun comprend une image particulière.

Ainsi, le dispositif 1 conforme à l'invention prévoit la génération d'un ou de plusieurs signaux visuels S1, S2, S3, de type « looming », qui simulent, par une augmentation de la taille de l'image correspondante, une approche rapide des éléments montrés par l'image, cette simulation visuelle d'une approche permettant d'effaroucher les oiseaux.

Ledit dispositif 1 prévoit, de préférence, une série de signaux différents, qui est efficace sur un grand nombre d'espèces aviaires, comme précisé ci-dessous. Ce dispositif 1 peut notamment être mis en œuvre pour faire fuir les oiseaux de zones où leur présence se révèle nuisible ou dangereuse vis-à-vis des activités humaines, et notamment sur des domaines aéroportuaires.

Dans le cas d'une application sur un aéroport, le dispositif 1 d'effarouchement visuel conforme à la présente invention est utilisé pour détourner les oiseaux des trajectoires des avions qu'ils soient en vol ou au sol, dans le but est de réduire de façon importante les collisions aviaires dans les phases d'approche, de montée et de roulage au sol. En fonction de la nature des stimuli (ou signaux) visuels utilisés et de leur combinaison, on est en mesure d'obtenir un effarouchement efficace pour une diversité importante d'oiseaux.

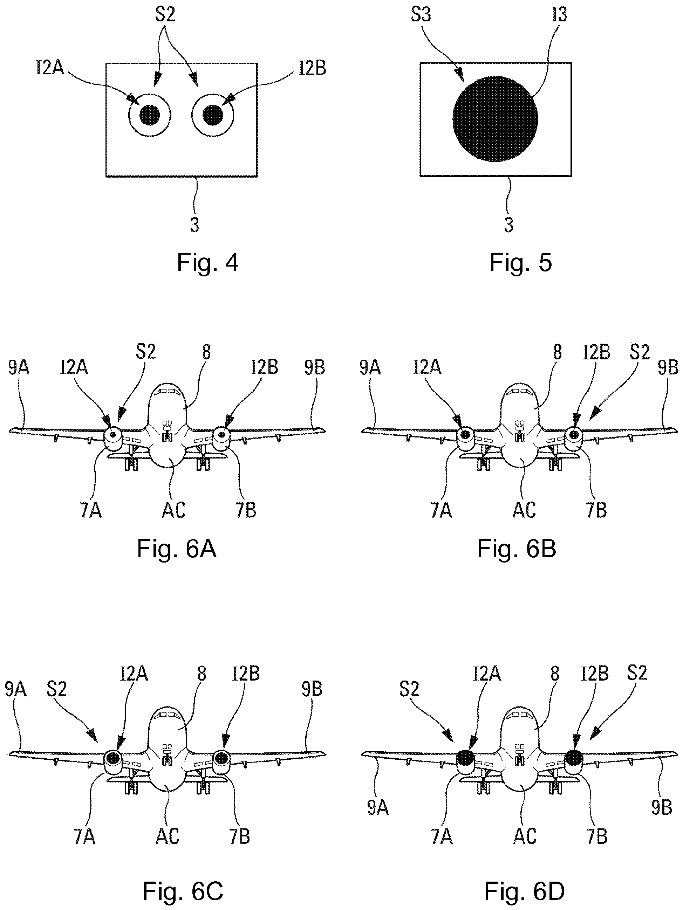

Dans un mode de réalisation préféré, lesdits moyens 3 génèrent au moins un signal visuel S1, S2, S3 comprenant au moins l'une des images suivantes :
- pour le signal visuel S1, une spirale I1, non tournante mais s'approchant, comme représenté sur les figures 2A à 2D, qui a montré une efficacité contre les galliformes ;
- pour le signal visuel S2, des yeux, dont chaque œil I2A, I2B est représenté sous forme d'un disque noir sur un rond blanc, comme illustré sur la figure 4, ces yeux étant particulièrement efficaces contre les rapaces ; et
- pour le signal visuel S3, un disque noir 13, comme représenté sur la figure 5, qui est extrêmement efficace contre tous les passereaux testés d'origine européenne ou africaine, et qui est également efficace contre les autres groupes aviaires mais ceci à un degré moindre.

Le dispositif 1 conforme à l'invention émet donc un ou plusieurs types de signaux ayant prouvé leur efficacité sur différents groupes d'oiseaux (rapaces, passereaux, gallinacés) lors d'expérimentations, où ils ont induit, contrairement à d'autres stimuli usuels, des réactions de peur et d'évitement majeures.

Dans un mode de réalisation préféré, ledit dispositif 1 génère successivement les trois signaux préférés S1, S2 et S3 précités (spirale, yeux, disque noir), ce qui permet de balayer un large spectre et de limiter l'habituation, dont on a pu montrer qu'elle est quasi inexistante pour ces stimuli. La succession de ces trois stimuli permet de repousser l'essentiel voire l'ensemble des espèces rencontrées sans avoir besoin de les identifier.

En effet, des expérimentations en laboratoire et en conditions de captivité ont permis de tester les réactions d'oiseaux seuls ou en groupe, et de vérifier l'efficacité du dispositif 1. Des expérimentations de terrain ont conforté ces résultats, montrant l'efficacité de ces stimuli pour éloigner une variété d'espèces de passereaux (bulbuls, tisserins, moineaux, étourneaux), et ce avec une grande rapidité (inférieure à une seconde dans la plupart des cas). De plus, ces expérimentations en captivité et sur le terrain ont montré une très faible accoutumance des oiseaux à ces signaux préférés S1, S2 et S3.

Dans le cadre de la présente invention, le dispositif 1 peut comporter, comme moyens 3 d'émission de signal visuel :
- un seul et même équipement, par exemple un écran électronique affichant directement le signal ou un système de projection qui projette le signal sur une surface dédiée, qui est utilisé pour émettre l'ensemble des signaux visuels S1, S2 et S3 envisagés ; ou
- plusieurs équipements, dont chacun est destiné à émettre un ou plusieurs signaux visuels S1, S2 et S3.

En outre, ledit dispositif 1 génère, une augmentation progressive de la taille x d'une image, comme illustré sur la figure 3 qui montre une variation linéaire de x en fonction du temps t. Il est bien entendu également envisageable de réaliser une augmentation non progressive, par exemple une augmentation qui est accélérée ou décélérée au début et/ou à la fin de la modification de taille ou bien une augmentation qui présente une variation aléatoire.

Dans un exemple de mise en œuvre, la fréquence d'augmentation d'un signal S1, S2, S3 de type « looming » est de 0,5Hz (la période T valant alors deux secondes), et la durée totale d'apparition des augmentations successives (par exemple cinq augmentations successives) de ce signal S1, S2, S3 est de dix secondes.

Dans un mode de mise en œuvre préféré, les signaux S1, S2 et S3 sont générés par le dispositif 1 de manière à se succéder de façon aléatoire et à des intervalles variables (de quelques secondes à quelques dizaines de secondes) pour limiter les risques d'habituation, qui sont par ailleurs très faibles. Cette apparition aléatoire (par exemple : signal S1, signal S3, signal S2, signal S3, signal S1 signal S2,...) est de préférence préprogrammée dans les moyens 2. De plus, dans un mode de mise en œuvre préféré, chaque signal visuel est généré pendant une même durée, par exemple pendant dix secondes.

Le choix précis de ces signaux et de leur combinaison permet d'effaroucher un maximum d'espèces différentes du monde entier, et ceci sans identification préalable. La présente invention prévoit également la possibilité d'émettre d'autres types de signaux que les signaux préférés S1, S2, et S3 précités, ou d'autres successions de signaux, qui pourraient notamment être plus efficaces selon le pays et/ou la ou les espèces aviaires ciblées.

Ainsi, on peut prévoir sur le dispositif 1, notamment :
- différentes vitesses d'augmentation de l'image ;
- différentes durées d'apparition des signaux visuels considérés ;
- différents niveaux de contraste, de résolution, de couleur et/ou de taille pour ces signaux visuels ; et
- différentes successions des signaux visuels.

Ces dernières caractéristiques permettent d'augmenter l'efficacité de la suite de signaux visuels, générée par le dispositif 1, en particulier en fonction de l'avancement des connaissances et de la situation rencontrée (espèces cibles, pays).

Dans un mode de réalisation particulier, on prévoit l'une des couleurs bleu, violet et noir sur fond blanc, qui ont montré une grande efficacité lors de tests sur un disque. De plus, on adapte les couleurs et les tailles aux espèces à effaroucher.

Ainsi les limicoles et les passereaux sont plus réactifs à un disque noir. Les ardéidés et les passereaux sont aussi réactifs à un disque bleu, et les ardéidés, anatidés, phalacrocoracidés sont réactifs à un disque violet. Par ailleurs, les anatidés et les ardéidés sont aussi réactifs à des disques de taille réduite de 50%.

Par ailleurs, dans un mode de réalisation simplifié, les moyens 2 de gestion peuvent être intégrés dans les moyens 3 ou dans les moyens 5.

Dans le cadre de la présente invention, ledit dispositif 1 peut :
- être prévu au sol, avec notamment des moyens 3 d'émission de signaux qui sont disposés au niveau de zones sensibles d'activité humaine, en particulier sur un aéroport, et de préférence à proximité d'une piste ;
- être monté sur une autre structure fixe, un bâtiment ou une éolienne ;
- être monté sur un véhicule roulant, qui est par exemple utilisé sur un aéroport ; ou
- être embarqué sur un aéronef AC.

Ledit dispositif 1 peut notamment être utilisé pour effaroucher des espèces aviaires sur un domaine aéroportuaire, en étant exploité au sol ou en étant embarqué sur un aéronef AC, en particulier un avion de transport, et ceci notamment pour limiter les collisions aviaires avec les aéronefs.

Dans le cas notamment d'un dispositif 1 embarqué sur un aéronef AC, comme représenté à titre d'illustration sur les figures 6A à 6D, on dispose d'un dispositif d'effarouchement 1 qui est indépendant des installations aéroportuaires locales, et qui peut donc être utilisé (mais non exclusivement) sur des aéroports dépourvus d'équipements d'effarouchement et de lutte aviaire, en particulier pour limiter les collisions aviaires.

Dans ce cas, le pilote peut déclencher le dispositif d'effarouchement 1 (à l'aide des moyens 5 qui sont prévus dans le poste de pilotage) avant de décoller ou à l'approche d'un aéroport, pour lequel le risque aviaire est suspecté, sans avoir à connaître les espèces locales à effaroucher.

La diffusion des signaux durant la phase de roulage au sol, permet en premier lieu de sécuriser la piste avant le décollage. En outre, la diffusion des signaux durant les phases initiale de décollage et finale d'atterrissage (au-dessous de 1500 pieds) permet de limiter les collisions dans ces phases de vol (représentant 70 % des cas de collisions, les plus graves ayant lieu au décollage).

Dans le mode de réalisation particulier, représenté sur les figures 6A, 6B, 6C et 6D, le dispositif 1 génère le signal S2 de la figure 4 représentant des yeux, en émettant les images I2A et I2B respectivement au niveau des moteurs 7A et 7B de l'aéronef AC (qui correspond à un avion de transport bimoteur). Ces figures 6A, 6B, 6C et 6D montrent schématiquement des tailles successives croissantes du signal visuel S2 généré par le dispositif 1. Dans ce cas, les moyens 3 peuvent comporter des équipements qui sont, par exemple, agencés au niveau des entrées d'air ou des capots des moteurs 7A et 7B et qui sont formés de manière à projeter les images I2A et I2B sur les aubes des moteurs 7A et 7B.

Dans le cas d'un dispositif 1 embarqué, d'autres modes de réalisation des moyens 3 sont bien entendu envisageables. En particulier, les moyens 3 peuvent être prévus pour générer les signaux (par affichage direct ou par projection) sur des surfaces externes de l'aéronef AC, par exemple au niveau du fuselage 8 ou des ailes 9A et 9B de l'aéronef AC.

Un dispositif 1 embarqué est efficace principalement dans les phases de vol proche du sol : en phase de roulage, au décollage, en montée, à l'approche et à l'atterrissage. L'efficacité des signaux visuels émis dépend notamment de la performance du dispositif 1 utilisé (taille des signaux, intensité lumineuse,...), ainsi que des conditions météorologiques rencontrées.

Le dispositif 1 conforme à la présente invention peut également être appliqué à d'autres domaines, et notamment au domaine agricole et au domaine de l'architecture (bâtiments).

Par ailleurs, dans une application préférée, on prévoit d'agencer au moins un tel dispositif sur une éolienne. On sait que les oiseaux tués par les pales d'une éolienne attirent d'autres oiseaux et créent une pollution.

De façon usuelle, une éolienne comprend un mât pourvu d'une nacelle équipée d'un générateur électrique produisant de l'électricité lorsqu'un arbre est entraîné en rotation. Ce générateur électrique est entraîné en rotation par un rotor équipé de pales, qui est soumis à l'action du vent.

Dans cette application, on agence, dans un mode de réalisation particulier, ledit dispositif en hauteur, par exemple au niveau de l'axe de rotation des pales du rotor, ce qui permet d'empêcher efficacement le problème précité.

## Revendications

1. Procédé d'effarouchement visuel d'espèces aviaires, suivant lequel on génère au moins un signal visuel (S1, S2, S3) en le gérant par des moyens de gestion (2) et en l'émettant par des moyens d'émission comprenant un écran électronique ou un système de projection, **caractérisé en ce que** ledit au moins un signal visuel (S1, S2, S3) comprenant au moins une image (I1, I2A, I2B, I3), de taille variable au cours du temps, qui simule une approche par une augmentation de la taille (x) de l'image (I1, I2A, I2B, I3).

2. Procédé selon la revendication 1,
**caractérisé en ce que**, pour un même signal visuel (S1, S2, S3), on réalise une suite d'augmentations de la taille de l'image (I1, I2A, I2B, I3) correspondante, à chaque fois d'une taille minimale (xm) à une taille maximale (xM).

3. Procédé selon l'une des revendications 1 et 2,
**caractérisé en ce que** ledit signal visuel (S1, S2, S3) comprend l'une des images (I1, I2A, I2B, I3) suivantes :
- des yeux ;
- un disque ; et
- une spirale.

4. Procédé selon l'une des revendications 1 à 3,
**caractérisé en ce que** l'on génère successivement plusieurs signaux visuels (S1, S2, S3) différents.

5. Procédé selon la revendication 4,
**caractérisé en ce que** l'on génère la succession desdits signaux visuels (S1, S2, S3) différents, de façon aléatoire et à des intervalles irréguliers.

6. Procédé selon l'une des revendications 4 et 5,
**caractérisé en ce que** chaque signal visuel (S1, S2, S3) est généré pendant une même durée.

7. Procédé selon l'une quelconque des revendications précédentes, **caractérisé en ce que** l'on augmente, de façon progressive, la taille (x) de l'image (I1, I2A, I2B, I3).

8. Procédé selon l'une quelconque des revendications précédentes, **caractérisé en ce que** l'on prévoit :
- différentes vitesses d'augmentation de l'image ;
- différentes durées d'apparition des signaux visuels considérés ;
- différents niveaux de contraste, de résolution, de couleur et/ou de taille pour ces signaux visuels ; et
- différentes successions des signaux visuels.

9. Procédé selon l'une quelconque des revendications précédentes, **caractérisé en ce que** l'on engendre ledit au moins un signal visuel (S1, S2, S3) au niveau d'un engin mobile (AC) ou d'une structure fixe, de manière à ce qu'il soit visible de l'extérieur dudit engin mobile (AC) ou de ladite structure fixe.

10. Dispositif d'effarouchement visuel d'espèces aviaires, ledit dispositif comportant des moyens (3) pour générer au moins un signal visuel (S1, S2, S3), ces moyens (3) comprenant des moyens de gestion (2) et des moyens d'émission comprenant un écran électronique ou un système de projection, **caractérisé en ce que** ledit au moins un signal visuel (S1, S2, S3) comprenant au moins une image (I1, I2A, I2B, I3), de taille variable au cours du temps, qui simule une approche par une augmentation de la taille (x) de l'image (I1, I2A, I28, I3).

11. Dispositif selon la revendication 10,
**caractérisé en ce qu'**il comporte, de plus, des moyens (5) de déclenchement desdits moyens de génération (3) d'au moins un signal visuel (S1, S2, S3).

12. Engin mobile, en particulier un aéronef (AC),
**caractérisé en ce qu'**il comporte un dispositif d'effarouchement visuel (1) tel que celui spécifié sous l'une des revendications 10 et 11.

13. Engin mobile selon la revendication 12, correspondant à un aéronef (AC),
**caractérisé en ce que** lesdits moyens de génération (3) du dispositif d'effarouchement visuel (1) sont agencés de manière à générer au moins un signal visuel au niveau des ailes (9A, 9B) dudit aéronef (AC).

14. Engin mobile selon l'une des revendications 12 et 13, correspondant à un aéronef (AC),
**caractérisé en ce que** lesdits moyens de génération (3) du dispositif d'effarouchement visuel (1) sont agencés de manière à générer au moins un signal visuel (S2) au niveau de moteurs (7A, 7B) dudit aéronef (AC).

15. Structure fixe, en particulier éolienne,
**caractérisée en ce qu'**elle comporte un dispositif d'effarouchement visuel (1) tel que celui spécifié sous l'une des revendications 10 et 11.

## Patentansprüche

1. Verfahren zur visuellen Abschreckung von Vogelarten, demgemäß mindestens ein visuelles Signal (S1, S2, S3) erzeugt wird, indem es durch Verwaltungsmittel (2) verwaltet wird und indem es durch Ausgabemittel ausgegeben wird, umfassend einen elektronischen Bildschirm oder ein Projektionssystem, **dadurch gekennzeichnet, dass** das mindestens eine visuelle Signal (S1, S2, S3) mindestens ein Bild (I1, I2A, I2B, I3), im Zeitverlauf von variabler Größe, umfasst, das eine Annäherung durch eine Vergrößerung der Größe (x) des Bildes (I1, I2A, I2B, I3) simuliert.

2. Verfahren nach Anspruch 1,
**dadurch gekennzeichnet, dass** für ein gleiches visuelles Signal (S1, S2, S3) eine Abfolge von Vergrößerungen der Größe des entsprechenden Bildes (I1, I2A, I2B, I3) geschaffen wird, jedes Mal von einer Minimalgröße (xm) zu einer Maximalgröße (xM).

3. Verfahren nach einem der Ansprüche 1 und 2,
**dadurch gekennzeichnet, dass** das visuelle Signal (S1, S2, S3) eines der folgenden Bilder (I1, I2A, I2B, I3) umfasst:
- Augen;
- eine Scheibe; und
- eine Spirale.

4. Verfahren nach einem der Ansprüche 1 bis 3,
**dadurch gekennzeichnet, dass** aufeinanderfolgend mehrere unterschiedliche visuelle Signale (S1, S2, S3) erzeugt werden.

5. Verfahren nach Anspruch 4,
**dadurch gekennzeichnet, dass** die Aufeinanderfolge der unterschiedlichen visuellen Signale (S1, S2, S3) auf zufällige Weise und in unregelmäßigen Abständen erzeugt wird.

6. Verfahren nach einem der Ansprüche 4 und 5,
**dadurch gekennzeichnet, dass** jedes visuelle Signal (S1, S2, S3) während einer gleichen Dauer erzeugt wird.

7. Verfahren nach einem der vorstehenden Ansprüche,
**dadurch gekennzeichnet, dass** die Größe (x) des Bildes (I1, I2A, I2B, I3) auf progressive Weise vergrößert wird.

8. Verfahren nach einem der vorstehenden Ansprüche,
**dadurch gekennzeichnet, dass** vorgesehen sind:
- unterschiedliche Vergrößerungsgeschwindigkeiten des Bildes;
- unterschiedliche Erscheinungsdauern der erwogenen visuellen Signale;
- unterschiedliche Kontrast-, Auflösungs-, Farb- und/oder Größenniveaus für diese visuellen Signale; und
- unterschiedliche Aufeinanderfolgen der visuellen Signale.

9. Verfahren nach einem der der vorstehenden Ansprüche,
**dadurch gekennzeichnet, dass** das mindestens eine visuelle Signal (S1, S2, S3) im Bereich einer mobilen Maschine (AC) oder einer festen Struktur generiert wird, sodass es von außerhalb der mobilen Maschine (AC) oder der festen Struktur sichtbar ist.

10. Vorrichtung zur visuellen Abschreckung von Vogelarten, wobei die Vorrichtung Mittel (3) umfasst, um mindestens ein visuelles Signal (S1, S2, S3) zu erzeugen, wobei diese Mittel (3) Verwaltungsmittel (2) und Ausgabemittel umfassen, umfassend einen elektronischen Bildschirm oder ein Projektionssystem, **dadurch gekennzeichnet, dass** das mindestens eine visuelle Signal (S1, S2, S3) mindestens ein Bild (I1, I2A, I2B, I3), im Zeitverlauf von variabler Größe, umfasst, das eine Annäherung durch eine Vergrößerung der Größe (x) des Bildes (I1, I2A, I2B, I3) simuliert.

11. Vorrichtung nach Anspruch 10,
**dadurch gekennzeichnet, dass** sie, außerdem, Mittel (5) für ein Auslösen der Erzeugungsmittel (3) des mindestens einen visuellen Signals (S1, S2, S3) umfasst.

12. Mobile Maschine, insbesondere ein Luftfahrzeug (AC),
**dadurch gekennzeichnet, dass** sie eine Vorrichtung zur visuellen Abschreckung (1) wie diejenige unter einem der Ansprüche 10 und 11 spezifiziert umfasst.

13. Mobile Maschine nach Anspruch 12, entsprechend einem Luftfahrzeug (AC),
**dadurch gekennzeichnet, dass** die Erzeugungsmittel (3) der Vorrichtung zur visuellen Abschreckung (1) so angeordnet sind, um mindestens ein visuelles Signal im Bereich der Flügel (9A, 9B) des Luftfahrzeugs (AC) zu erzeugen.

14. Mobile Maschine nach einem der Ansprüche 12 und 13, entsprechend einem Luftfahrzeug (AC),
**dadurch gekennzeichnet, dass** die Erzeugungsmittel (3) der Vorrichtung zur visuellen Abschreckung (1) so angeordnet sind, um mindestens ein visuelles Signal (S2) im Bereich von Motoren (7A, 7B) des Luftfahrzeugs (AC) zu erzeugen.

15. Feste Struktur, insbesondere Windturbine,
**dadurch gekennzeichnet, dass** sie eine Vorrichtung zur visuellen Abschreckung (1) wie diejenige unter einem der Ansprüche 10 und 11 spezifiziert umfasst.

## Claims

1. Method for visually scaring avian species, according to which at least one visual signal (S1, S2, S3) is generated, the visual signal being managed by management means (2) and being emitted by emission means including an electronic screen or a projection system,
**characterised in that** said at least one visual signal (S1, S2, S3) comprises at least one image (I1, I2A, I2B, I3), varying in size over time, which simulates approach by an increase in the size (x) of the image (I1, I2A, I2B, I3).

2. Method according to claim 1,
**characterised in that** for one and the same visual signal (S1, S2, S3), a sequence of increases in the size of the corresponding image (I1, I2A, I2B, I3) is produced, each time from a minimum size (xm) to a maximum size (xM).

3. Method according to either claim 1 or 2,
**characterised in that** said visual signal (S1, S2, S3) comprises one of the following images (I1, I2A, I2B, I3):
- eyes;
- a disc; and
- a spiral.

4. Method according to any of Claims 1 to 3,
**characterised in that** several different visual signals (S1, S2, S3) are generated successively.

5. Method according to Claim 4,
**characterised in that** the succession of said different visual signals (S1, S2, S3) is generated in a random manner and at irregular intervals.

6. Method according to either Claim 4 or 5,
**characterised in that** each visual signal (S1, S2, S3) is generated for the same duration.

7. Method according to any of the preceding claims,
**characterised in that** the size (x) of the image (I1, I2A, I2B, I3) is increased progressively.

8. Method according to any of the preceding claims,
**characterised in that** the following are provided:
- different speeds of increase of the image;
- different durations of appearance of the visual signals in question;
- different levels of contrast, of resolution, of colour and/or of size for these visual signals; and
- different successions of the visual signals.

9. Method according to any of the preceding claims,
**characterised in that** said at least one visual signal (S1, S2, S3) is generated in the region of a movable unit (AC) or a fixed structure, in such a way that it is visible from the exterior of said movable unit (AC) or of said fixed structure.

10. Device for visually scaring avian species, said device including means (3) for generating at least one visual signal (S1, S2, S3), this means (3) comprising management means (2) and emission means including an electronic screen or a projection system, **characterised in that** said at least one visual signal (S1, S2, S3) comprises at least one image (I1, I2A, I2B, I3), varying in size over time, which simulates approach by an increase in the size (x) of the image (I1, I2A, I2B, I3).

11. Device according to claim 10,
**characterised in that** it also includes means (5) for triggering said means for generation (3) of at least one visual signal (S1, S2, S3).

12. Movable unit, in particular an aircraft (AC),
**characterised in that** it includes a visual scaring device (1) such as that specified in either claim 10 or 11.

13. Movable unit according to claim 12, corresponding to an aircraft (AC),
**characterised in that** said generation means (3) of the visual scaring device (1) are arranged in such a way as to generate at least one visual signal in the region of the wings (9A, 9B) of said aircraft (AC).

14. Movable unit according to either claim 12 or 13, corresponding to an aircraft (AC), **characterised in that** said generation means (3) of the visual scaring device (1) are arranged in such a way as to generate at least one visual signal (S2) in the region of engines (7A, 7B) of said aircraft (AC).

15. Fixed structure, in particular a wind turbine,
**characterised in that** it includes a visual scaring device (1) such as that specified in either claim 10 or 11.
